# EUROPÄISCHE PATENTANMELDUNG

(11) **EP 1 176 546 A2**
(43) Veröffentlichungstag der Anmeldung: **30.01.2002**
(21) Anmeldenummer: 01107681.7
(22) Anmeldetag: 28.03.2001
(51) Int. Cl.: G06K 19/06

(54) **Verfahren, um die logische Zusammengehörigkeit und den räumlichen Abstand von Objektteilen zu erfassen**

(30) Priorität: 28.07.2000 DE 10037308
(71) Anmelder: millimeta GmbH, 64367 Mühltal (DE)
(72) Erfinder: Schlenkhoff, Thomas, 63263 Neu-Isenburg (DE); von Tettau, Matthias, 60528 Frankfurt/Main (DE)
(74) Vertreter: Köllner & Kewitz

(57) **Zusammenfassung**

Die Erfindung betrifft ein Objektteil, eine Anordnung und Verfahren zum Erkennen dieses Objektteils. Das Objektteil weist mindestens ein Markierungssegment (3) auf, wobei das Markierungssegment (3) auf dem Objektteil (2) so angeordnet ist, dass beim Zusammenfügen des Objektteils (2) mit anderen Objektteilen (2a), die ebenfalls Markierungssegmente (3a) aufweisen, den Markierungssegmenten (3, 3a) aufgrund ihrer Relation zueinander Informationen über die Objektidentität und/oder über die räumliche Anordnung der Objektteile entnommen werden können.

## Beschreibung

Die Erfindung betrifft ein Verfahren und eine Anordnung zur Erfassung von zusammenhängenden Objektteilen.

Ein wesentlicher nicht jedoch der einzige Anwendungsbereich der vorliegenden Erfindung ist die Plakatwerbung. Die Kontrolle von Plakatierern, d.h. den Personen, die Plakate kleben, erfolgt manuell. Kontrolleure überprüfen die einzelnen Plakatwände und stellen fest, ob die Plakatierer sorgfältig gearbeitet haben. Diese Art der Kontrolle ist sehr zeit- und kostenintensiv. Weiterhin können nur Stichproben vorgenommen werden, wodurch viele Fehler übersehen werden.

Aufgabe der vorliegenden Erfindung ist es, ein Verfahren und eine Anordnung bereitzustellen, die es ermöglichen, eine einfache und kostengünstige Qualitätskontrolle beim Zusammensetzen von Objektteilen durchzuführen. Bei dieser Qualitätskontrolle ist es besonders wichtig, dass die einzelnen Bauteile eines Objektes präzise zusammengesetzt wurden.

Die Aufgabe wird durch eine Anordnung und ein Verfahren mit den Merkmalen der unabhängigen Ansprüche gelöst.

Dies erfolgt insbesondere durch ein Objektteil mit mindestens einem Markierungssegment, wobei das Markierungssegment auf dem Objektteil so angeordnet ist, dass beim Zusammenfügen des Objektteils mit anderen Objektteilen, die ebenfalls Markierungssegmente aufweisen, den Markierungssegmenten aufgrund ihrer Relation zueinander Informationen über die Objektidentität und bei Bedarf über die räumliche Anordnung der Objektteile entnommen werden können.

Bei diesen Objektteilen handelt es sich vorzugsweise um Teile eines Plakats, die mit Markierungssegmenten versehen sind. Die Markierungssegmente sind vorzugsweise als Strichcodes ausgebildet. Durch die Breite und den Abstand der einzelnen Striche können Informationen codiert werden. Es ist jedoch auch denkbar, dass Farben oder Farbsegmente zum Kodieren verwendet werden. Eine weitere Möglichkeit besteht darin, anhand von Symbolen, die einen bestimmten Verlauf aufweisen, den Abstand der einzelnen Objektteile zu bestimmen. Durch die Verwendung von horizontalen und vertikalen Linien können Verschiebungen in mehreren Dimensionen erkannt werden.
Die Verwendung eines Strichcodes hat den Vorteil, dass durch den Strichcode nicht nur die Abweichung der einzelnen Objektteile zueinander bestimmt, sondern auch eine Nummer bzw. Identifikation in den Strichcode mit eingearbeitet werden kann. Ein Barcode kann diese Anforderungen am besten lösen. Der Barcode kann sowohl in der Horizontalen als auch in der Vertikalen auf den Randbereichen der Objektteile angeordnet sein. Im Falle der Verwendung für ein Plakat kann die
Identifikation immer dann automatisch erzeugt werden, wenn ein neuer Auftrag für eine Werbekampagne erzeugt wird. Der Barcode sollte so groß gewählt werden, dass er einerseits noch gut eingelesen, jedoch andererseits nicht mehr von weitem gesehen werden kann.
Um eine Qualitätssicherung zu ermöglichen, ist es vorteilhaft, mindestens n-1 Markierungen zu verwenden, wobei n die Anzahl der Objektteile ist. Es ist zu beachten, dass sich eine Markierung aus mindestens zwei Markierungssegmenten zusammensetzt.

Ein weiterer Bestandteil der vorliegenden Erfindung ist eine Anordnung, die in der Lage ist, die Markierungen zu lesen. Die Anordnung weist eine optische Leseeinheit zum Einlesen der Markierungen auf. Hierbei kann es sich um einen bekannten Barcodeleser handeln. Zusätzlich weist die Anordnung einen Speicherbereich auf, in dem Informationen der Leseeinheit gespeichert werden. Eine Bearbeitungseinheit, die vorzugsweise als Prozessor ausgebildet ist, legt für jedes Objekt, das überprüft wird, einen Datensatz an. Bei diesem Datensatz handelt es sich um logisch oder physikalisch zusammenhängende Daten. Diesem Datensatz werden die gelesenen Informationen der Leseeinheit zugeordnet. Der Datensatz ermöglicht es, gelesene Informationen von einem Objekt als Einheit zu betrachten.
Sollte ein Objekt mehrere Markierungen aufweisen, so ist es in einer vorteilhaften Ausführungsform vorgesehen, dass der Benutzer geführt wird, um sicherzustellen, dass alle Markierungen eingelesen werden. Hierzu weist die Anordnung in einer möglichen Ausgestaltung ein Display auf, durch das der Benutzer optisch geführt wird. Mit einem Lautsprecher kann angezeigt werden, ob der Lesevorgang erfolgreich verlaufen ist. Das Display kann ebenfalls dazu dienen, anzuzeigen, in welcher Reihenfolge die Markierungen eingelesen werden müssen. Weiterhin kann das Display zur objektabhängigen Benutzerführung verwendet werden. Sollten alle Markierungen erfolgreich gelesen worden sein, so wird dies dem Benutzer mitgeteilt, damit eine Quittierung möglich ist.
Die erfindungsgemäße Anordnung kann ebenfalls dazu verwendet werden, Toleranzbereiche zu überprüfen. Die Ergebnisse dieser Prüfung werden gespeichert.

Ein zeitlicher Zusammenhang der Eingabe kann entweder durch die Zeitstempel jedes Datensatzes ermittelt werden oder durch einen zusätzlichen Timer.
Um eine möglichst hohe Flexibilität der Anordnung zu gewährleisten, ist diese in der Lage, unterschiedliche Typen von Objekten zu erkennen und ihre Markierungen zu überprüfen. Dies wird dadurch erreicht, indem für die unterschiedlichen Objekttypen unterschiedliche Erkennungsmuster und Benutzerführungsinformationen gespeichert werden können.
Werden die Objekte wie Plakate erst am Klebeort zusammengesetzt, so ist es vorteilhaft, dass ebenfalls Ortspositionen oder andere Informationen, die den Ort bestimmen, in den Datensatz übernommen werden. Eine mögliche Referenzinformation, die den Ort bestimmt, ist eine GPS-Bestimmung oder ein besonderes Muster, z. B. ein Barcode, das an dem Ort angebracht ist und aus dem Rückschlüsse auf den Ort getroffen werden können. Alle diese Informationen müssen in einem bestimmten zeitlichen Zusammenhang zueinander stehen. Hierzu kann der absolute Zeitpunkt des Einlesevorgangs dienen oder der relative Zeitabstand.
Durch die gespeicherte Zeitinformation ist es zusätzlich möglich, den GPS (Global Positioning System)-eigenen Fehlerfaktor aus den Ortsdaten herauszurechnen.

Die gesammelten Informationen werden über eine Schnittstelle an ein zentrales Computersystem übertragen. Diese Schnittstelle kann entweder mit einem Kabel verbunden werden oder sie ist als Funkmodul ausgebildet. Das Kabel dient dazu, die Anordnung mit einem PC oder direkt mit einem Netzwerk zu verbinden. Dieses Netzwerk kann sowohl ein lokales Netzwerk als auch ein globales Netzwerk wie das Internet sein. Die Verbindung kann auch über einen speziellen Adapter erfolgen.

Damit die Anordnung neue Muster, Objekttypen und ortspezifische Markierungen sowie deren Informationen laden kann, ist die Schnittstelle bidirektional ausgelegt. Bei diesen Informationen handelt es sich vorzugsweise um Soll-Klebedaten.

Ein weiterer Bestandteil der Erfindung ist ein Verfahren, das insbesondere für die Qualitätskontrolle von Plakatklebungen angewandt wird.
Es handelt sich hierbei um ein Verfahren zum mobilen Überprüfen von aus mehreren Objekteilen zusammengesetzten Objekten. Hintergrund dieses Verfahrens ist, dass der Plakatierer seine Arbeit selber überprüft. Eine Bezahlung kann somit davon abhängig gemacht werden, ob und wieweit der Datensatz für jedes Plakat vollständig ist. In einem möglichen ersten Schritt lädt der Plakatierer neue Informationen für die zu klebenden Plakate in die erfindungsgemäße Anordnung, soweit sie nicht bereits geladen sind. Bei diesem ersten Schritt wird die Anordnung zur Erkennung von zusammengesetzten Objektteilen so konfiguriert, dass Informationen für die Erkennung der Markierungen vorhanden sind.
Nach dem Kleben der Plakatteile werden in einem zweiten Schritt mit Hilfe der erfindungsgemäßen Anordnung die Markierungen der Objekte gelesen und als Informationen gespeichert. Für die Bestimmung des Ortes wird zusätzlich eine ortsgebundene Information, wie die GPS-Position, gespeichert. Es ist jedoch auch möglich, dass eine zusätzliche Markierung gelesen wird, die am Ort befestigt ist und aus der die Identitäten des Ortes entnommen werden können.
Im Laufe einer Periode kann dieser Schritt für eine Vielzahl von Objekten wiederholt werden.
Nachdem alle Informationen von den zusammengesetzten Objekten bzw. Plakaten gesammelt wurden, löst der Plakatierer einen Sendevorgang aus, durch den die Informationen an einen zentralen Rechner oder einen Rechnerverbund übermittelt werden. Die Übertragung der Daten kann hierbei verschlüsselt erfolgen. Der zentrale Rechner wertet die Informationen aus.

Durch das vorliegende Verfahren kann ein elektronisches Klebekontrollsystem bestimmt werden, das Aufschluss darüber gibt, ob, wann und in welcher Qualität ein Werbeträger mit einem Plakatmotiv plakatiert wurde. Diese Informationen werden z. B. via Internet Auftraggebern von Klebungen, also Aussenwerbe-, Werbe- und Mediaagenturen, zur Verfügung gestellt, die dadurch eine neutrale Ausführungs- und Qualitätsbestätigung eines vergebenen Auftrags erhalten.

In einer vorteilhaften Ausführungsform des Verfahrens wird in einem zusätzlichen Schritt die Markierung des sich noch am Werbeträger befindlichen Vorgängerplakates eingelesen. Dadurch wird festgestellt, ob das Plakat über den gebuchten Zeitraum an der Werbefläche angebracht war oder eventuell beschädigt wurde.

Das Datenverarbeitungssystem zur Aufarbeitung und Auswertung dieser Informationen besitzt eine Schnittstelle, die Informationen von der erfindungsgemäßen Anordnung zur Erkennung von zusammengesetzten Objektteilen entweder über ein Netzwerk oder per Funk austauscht. Der Datenaustausch erfolgt vorzugsweise verschlüsselt. Für die Verschlüsselung werden die bekannten Algorithmen angewandt.
Dieses Datenverarbeitungssystem weist eine Anzeigeeinheit auf, die in einer Dimension die Ortsinformationen abbildet, in einer zweiten Dimension vorzugsweise die Objekte, wobei die Qualität, mit der die Objektteile zusammengesetzt wurden, mit Hilfe einer Farbe dargestellt wird. Hierdurch entsteht ein Raster, dessen Schnittpunkte durch Farbmarkierungen gekennzeichnet sind. In der Regel werden die Informationen auf den Achsen in Form von Balken dargestellt, die sich in die entsprechende Dimension erstrecken. Die Schnittpunkte sind in diesem Fall Rechtecke, die je nach Güte und Qualität unterschiedliche Farben aufweisen. Maßgeblich für die Qualität ist es, ob überhaupt ein kompletter Datensatz angelegt wurde und wie groß die Abweichungen bei der Anordnung der einzelnen Objektteile sind. Die Qualität wird vorzugsweise über eine größere Anzahl von Informationen gemittelt. Hierdurch kann eine ganze Kampagne in einer Region dargestellt werden. Durch diese Anordnung mit einer entsprechenden Farbgebung kann schnell erkannt werden, ob bei einem bestimmten Objekttyp, d. h. bei einem bestimmten Plakattyp, oder in einer bestimmten Region Probleme auftreten.
Einen externen Zugriff auf die Informationen des Datenverarbeitungssystems erhalten nur berechtigte Mitarbeiter von Initiatoren, Werbe-, Media- und Außenwerbeagenturen sowie Plakatierungsunternehmen. Je nach Informationsbedürfnis werden neben Standardsichten speziell aufbereitete Sichten auf die Informationen zur Verfügung gestellt. Eine Sicht kann z. B. eine bestimmte Region oder auch eine bestimmte Kampagne berücksichtigen. Weiterhin kann in einer Sicht die Qualität der Anordnung der Objektteile berücksichtigt werden.

In einer weiteren Ausführungsform können die Informationen der Sichten in Form eines Statusreports per E-Mail den Interessenten zugesandt werden.

Das der Erfindung zugrundeliegende Verfahren erweitert das bisherige Einsatzfeld von Barcodes um die Möglichkeit, neben der Objektidentifikation auch den räumlichen Abstand zwischen Zeichenfolgeteilen zu messen.

Vorteilhafte Weiterbildungen der Erfindung werden in den Unteransprüchen beschrieben.

Im folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im einzelnen zeigen:
- Fig. 1: eine schematische Darstellung eines Markierungssegmentes, das ein Abstandssegment und ein Identifikationssegment aufweist, wobei das Identifikationssegment in einen Bereich für die Objektidentifikation und in einen Bereich für die Objektteilidentifikation unterteilt sein kann;
- Fig. 2: zwei Markierungssegmente, die an den Objektteilkanten zusammenstoßen;
- Fig. 3a-c: unterschiedliche Anordnungen von einlesbaren Markierungssegmenten und ihre Sollanordnung;
- Fig. 4a,b: unterschiedliche Anordnungen von nicht einlesbaren Markierungssegmenten;
- Fig. 5: einen Werbeträger, auf dem ein Plakat angeordnet ist, das aus Plakatteilen besteht, die mit Markierungssegmenten versehen sind;
- Fig. 6a-c: eine weitere Ausgestaltung der erfindungsgemäßen Markierungssegmente mit definiertem Weißrand als Abstandssegment, wobei die Markierungssegmente unterschiedlich überlappend dargestellt sind;
- Fig. 7: Markierungssegmente, entsprechend Fig.6;
- Fig. 8: die Verbindung der Leser-Anordnung, der Datenverarbeitungsanlage und der Anzeige-Anordnung über ein Netzwerk.

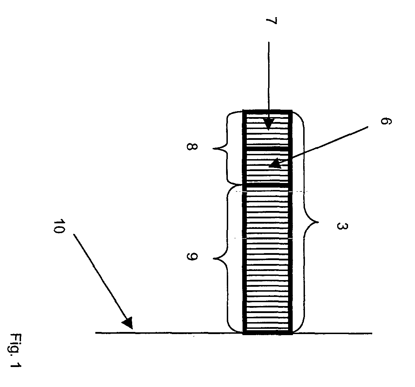

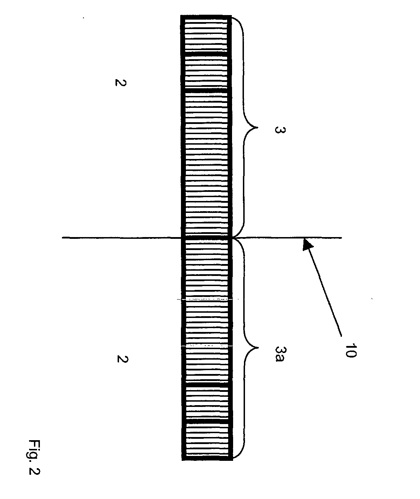

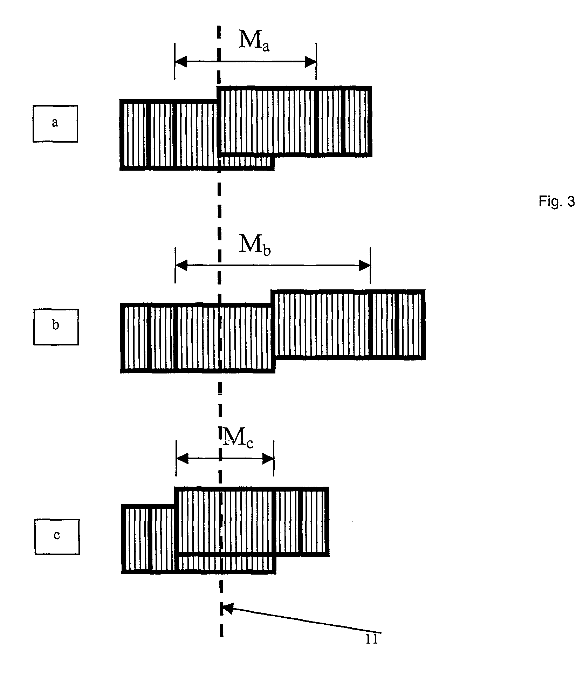

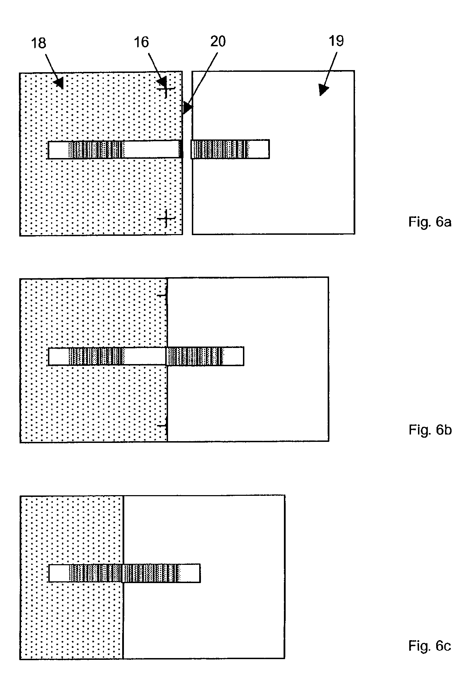

Figur 1 zeigt, dass jedes Markierungssegment 3, 3a ein Identifikationssegment 8 und ein Abstandssegment 9 umfasst. Es ist jedoch auch denkbar, das Abstandssegment oder das Identifikationssegment wegzulassen, ohne dabei einen wesentlichen Informationsverlust zu erleiden.
Es ist jedoch auch vorstellbar, das Identifikationssegment oder das Abstandssegment in einer anderen Form zu kodieren. In den Figuren 6 bis 8 ist das Abstandssegment durch einen weißen Rand beschrieben worden. Ein wesentlicher Informationsverlust tritt hierdurch nicht ein.
Das Identifikationssegment beinhaltet eine Zeichenfolge bzw. eine Strichfolge, die das Objekt identifiziert (Objektidentifikation 6), und eine Strichfolge, die das Objektteil 2 identifiziert (Objektteilidentifikation 7).
Das Abstandssegment 9 besteht aus einer Zeichenfolge, die sich zwischen dem Identifikationssegment und dem Rand des Ojektteils 2 befindet. Beim räumlich passenden Zusammenfügen von Objektteilen werden nebeneinander liegende Markierungssegmente zu einer Markierung zusammengefügt, so dass dadurch die Abstandssegmente unmittelbar ineinander übergehen. Im vorliegenden Fall handelt es sich bei den Markierungssegmenten um Strichcodes. Die dadurch entstehende Abstandszeichenfolge variiert je nach Präzision der Anordnung in ihrer Länge. Dadurch lässt sich der entstandene Strichcode (siehe Figur 2 und 3) elektronisch auswerten. Wie bereits oben erwähnt wurde, kann das Abstandssegment auch weggelassen werden oder durch einen weißen Rand bestimmt werden.

Beim Einlesen des Strichcodes durch die erfindungsgemäße Anordnung 13 wird überprüft, ob die Identifikationssegmente der Objektteile zueinander passen, und durch die Länge der Abstandszeichenfolge wird festgestellt, wie groß der Abstand zwischen den zusammengehörigen Objektteilen ist (siehe Figur 3) und ob sie innerhalb eines vorgegebenen Toleranzbereiches liegen.

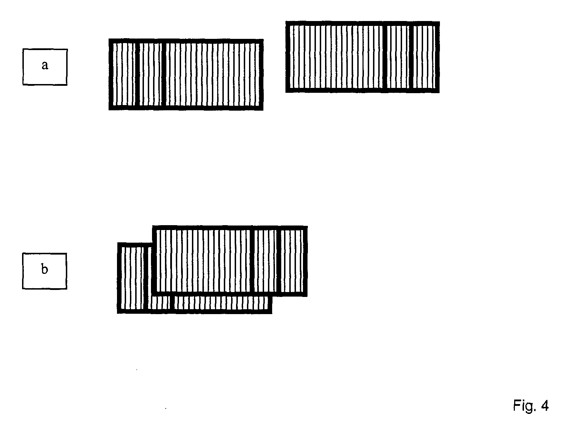

Eine Markierung in Form eines Strichcodes ist nicht auswertbar, wenn sich die zusammengehörigen Strichcodeteile nicht berühren (siehe Figur 4a) oder die zusammengehörigen Identifikationssegmente nicht vollständig lesbar sind (siehe Figur 4b).

Aus der Figur 2 ist ersichtlich, dass beim Zusammenfügen zweier Markierungssegmente eine Markierung in Form eines Strichcodes entsteht. Die beiden Objektteile stoßen hierbei korrekt aneinander.

Aus Figur 3 sind beispielhaft verschiedene Möglichkeiten der Anordnung zweier Objektteile bzw. deren Markierungssegmente zu entnehmen, bei denen der entstehende Strichcode auswertbar ist. In dieser Figur ist das linke Objektteil fixiert und das rechte wird darüber angeordnet.

Der Figur 4 sind Markierungssegmente zu entnehmen, die aufgrund ihrer Überlappung bzw. Entfernung 47 eine Auswertung unmöglich machen.

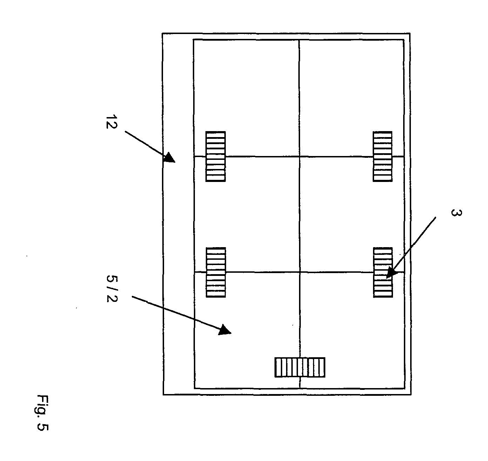

Die Figur 5 zeigt ein Plakat, das aus mehreren Objektteilen besteht, die jeweils mit Markierungssegmenten versehen sind. Das Plakat ist auf einem Objektträger 12 angeordnet.
Er wird deutlich, dass vorteilhafterweise n-1 Markierungen zu verwenden sind, um eine sinnvolle Verknüpfung der Objektteile vollständig zu überprügen.

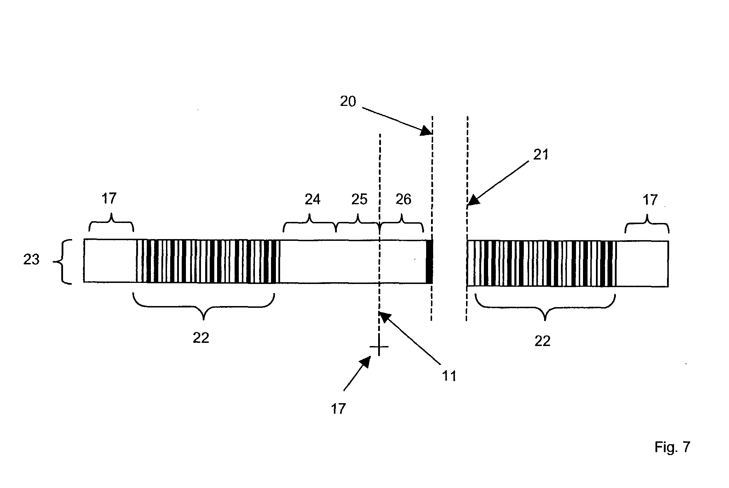

Die Figuren 6 und 7 zeigen eine weitere Ausgestaltung der erfindungsgemäßen Markierungssegmente, die Abstandssegmente in Form von weißen Randbereichen aufweisen. Bei diesen Markierungssegmenten ist vorzugsweise ein weißer Randbereich vorgesehen, der zur Abgrenzung und Abstandsmessung dient. Die Leseanordnung ist aufgrund des so erzeugten Kontrastes in der Lage, eine zusammengesetzte Markierung vom Objekt zu unterscheiden. Der Figur 7 ist zu entnehmen, ob die Markierung durch überlappende Markierungssegmente erzeugt wurde. Ein Lesen ist dann nicht mehr möglich, wenn die Markierungssegmente sich zu stark überlappen oder zu weit voneinander entfernt sind. Die Leseranordnung muss Toleranzen verarbeiten können, da eine absolut bestimmungsgemäße Überlappung oftmals nicht notwendig oder auch nicht möglich ist. Die Leseranordnung kann z. B. so ausgestaltet sein, dass sie die Striche der Markierungen vom Rande der Markierungssegmente liest. Sollten Markierungen im Überlappungsbereich nicht mehr lesbar sein, so muss eine entsprechende Toleranzgrenze vorgegeben sein, anhand derer entschieden werden kann, ob der Lesevorgang positiv abgeschlossen werden kann. Das Gleiche gilt für einen weißen Bereich, der zwischen den Markierungssegmenten entstehen kann, wenn diese zu weit voneinander entfernt angeordnet sind.

Der Figur 6a ist eine Passermarke 16 zu entnehmen, die dazu dient, die horizontale und vertikale Ausrichtung zu vereinfachen. Diese Passermarke 16 ist in Form eines Kreuzes ausgebildet, das auf der Oberfläche des Plakates angebracht ist. Der Plakatierer hat anhand dieses Kreuzes die Möglichkeit, das Plakat im Vorfeld, bevor es geklebt wird, auszurichten. Diese Passermarke 16 wird vorzugsweise auf einem unteren Bogen 18 des Plakates angebracht sein. Der obere Bogen 19 überlappt diesen unteren Bogen 18. Nach dem Kleben der Bögen wird die Passermarke überdeckt.

Der Figur 7 ist zu entnehmen, ob die Markierungssegmente Ruhezonen 17 aufweisen. Diese dienen dazu, den Barcode auf dem Markierungssegment vom Plakat abzugrenzen. Die Ruhezonen sind auf dem Markierungssegment zum Bogeninneren hin ausgerichtet. Der Barcode dient dazu, eine Bogen-ID 22 zu definieren. Ein weiterer weißer Bereich stößt an den Barcode an. Er erstreckt sich bis zum Rand des Bogens. Dieser weiße Bereich ist wiederum unterteilt. Er weist Segmente auf, die für die Bestimmung der Toleranz 26 nach oben und die Toleranz 25 nach unten dienen. Weiterhin ist ein Bereich bestimmt, der den Mindestabstand 24 angibt. Der Scanner ist aufgrund der vorgegebenen Größen dieser weißen Bereiche in der Lage, genauere Aussagen über die Qualität der Klebung zu machen.

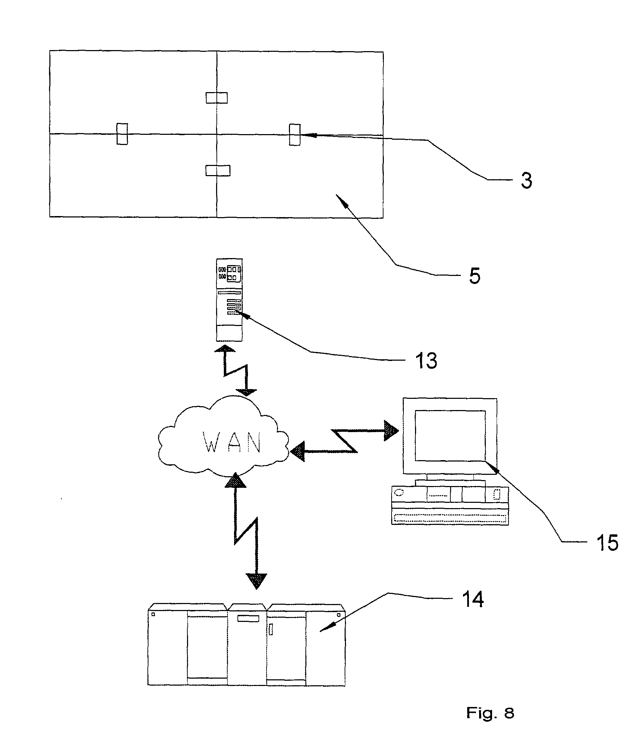

Figur 8 zeigt die Verbindung der Lese-Anordnung, der Datenverarbeitungsanlage und der Anzeige-Anordnung über ein Netzwerk.

Bei diesem Netzwerk handelt es sich vorzugsweise um das Internet. Die einzelnen Schnittstellen der Geräte müssen so ausgebildet sein, dass eine Kommunikation mit dem Netzwerk möglich ist. Adapter, die diese Schnittstellen erzeugen, sind nicht eingezeichnet. Es handelt sich jedoch bei diesen Adaptern um marktübliche Produkte, die eine Kommunikation mit dem entsprechenden Netzwerk ermöglichen. Gegebenenfalls dient ein PC als Schnittstellenwandler.

Bezugszeichenliste
- 2: Objektteil
- 3: Markierungssegment
- 4: Objekt
- 5: Plakat
- 6: Objektidentifikation
- 7: Objektteilidentifikation
- 8: Identifikationssegment
- 9: Abstandssegment
- 10: Objektteilkante
- 11: Sollanordnung
- 12: Werbeträger
- 13: Leseanordnung (Scanner)
- 14: Datenverarbeitungsanlage
- 15: Anzeigeanordnung (PC)
- 16: Passermarke
- 17: Ruhezone
- 18: Unterer Bogen
- 19: Oberer Bogen
- 20: Papierrand unterer Bogen
- 21: Papierrand oberer Bogen
- 22: Bogen-ID
- 23: Vertikale Toleranz
- 24: Mindestabstand (technisch bedingt)
- 25: Toleranzbereich (Abweichung nach unten)
- 26: Toleranzbereich (Abweichung nach oben)

## Patentansprüche

1. Objektteil (2) mit mindestens einem Markierungssegment (3), wobei das Markierungssegment (3) auf dem Objektteil (2) so angeordnet ist, dass beim Zusammenfügen des Objektteils (2) mit anderen Objektteilen (2a), die ebenfalls Markierungssegmente (3a) aufweisen, den Markierungssegmenten (3, 3a) aufgrund ihrer Relation zueinander Informationen über die Objektidentität und/oder über die räumliche Anordnung der Objektteile entnommen werden können.

2. Objektteil nach Anspruch 1, **dadurch gekennzeichnet, dass** die Objekteile (2, 2a) Teile eines Plakats (5) sind, die mit Markierungssegmenten versehen sind.

3. Objektteil nach einem oder mehreren der vorhergehenden Ansprüche, **dadurch gekennzeichnet, dass** die Markierungssegmente (3) Strichcodes aufweisen, die so angeordnet sind, dass der Umfang der Verschiebung der Objektteile (2, 2a) in mindestens einer Dimension feststellbar ist und/oder der Strichcode so ausgebildet ist, dass die Objektteile (2, 2a) identifizierbar sind.

4. Objektteil nach dem vorhergehenden Anspruch, **dadurch gekennzeichnet, dass** der Strichcode barcodeähnlich ist.

5. Anordnung zur Erkennung von zusammengesetzten Objektteilen (2, 2a), wobei die Objektteile Markierungssegmente nach einem oder mehreren der vorhergehenden Ansprüche aufweisen, und die Markierungssegmente im zusammengesetzten Zustand des Objektes Markierungen bilden,
- mit einer optischen Leseeinheit, zum Einlesen der Markierungen,
- mit einem Speicherbereich, zum Speichern der Informationen der Leseeinheit,
- mit einer Bearbeitungseinheit, die für jedes Objekt einen Datensatz anlegt, dem die gelesenen Informationen der Leseeinheit zugeordnet werden, wobei der Benutzer durch optische und/oder akustische Hinweise so geführt wird, dass alle notwendigen Markierungen eines Objektes gelesen werden und der Benutzer über den Status und/oder den Erfolg der Lesevorgänge informiert wird.

6. Anordnung nach dem vorhergehenden Anspruch, **dadurch gekennzeichnet, dass** die Bearbeitungseinheit den Versatz der Markierungssegmente speichert.

7. Anordnung nach einem oder mehreren der vorhergehenden Ansprüche, **gekennzeichnet durch** Mittel, die den Benutzer in Abhängigkeit von objektspezifischen Vorgaben führen.

8. Anordnung nach einem oder mehreren der vorhergehenden Ansprüche, **dadurch gekennzeichnet, dass** dem Datensatz Referenzinformationen, wie GPS-Informationen, Zeit- und/oder Ortsinformationen zugeordnet werden.

9. Anordnung nach einem oder mehreren der vorhergehenden Ansprüche, **gekennzeichnet durch** eine Schnittstelle zu einem Datenverarbeitungssystem, das die gelesenen Datensätze aufnimmt, wobei die Schnittstelle auch zum Laden von Markierungsinformationen von Objekttypen dienen kann.

10. Verfahren zum mobilen Überprüfen von aus mehreren Objektteilen zusammengesetzten Objekten, wobei die Objektteile Markierungssegmente nach einem oder mehreren der vorhergehenden Ansprüche aufweisen, mit einer Anordnung zur Erkennung von zusammengesetzten Objektteilen nach einem oder mehreren der vorhergehenden Ansprüche,
- mit einem ersten Schritt, bei dem die Anordnung zur Erkennung von zusammengesetzten Objektteilen so konfiguriert wird, dass Informationen für die Erkennung der Markierungen und/oder der objektabhängigen Führung des Benutzers vorhanden sind,
- mit einem zweiten Schritt, bei dem mit der Anordnung zur Erkennung von zusammengesetzten Objektteilen zusammengesetzte Markierungen des Objektes gelesen und als Informationen gespeichert werden, und bei dem zusätzlich ortsgebundene Informationen, wie GPS-Positionen, gespeichert werden, wobei dieser Schritt für eine Vielzahl von Objekten wiederholt werden kann,
- mit einem dritten Schritt, bei dem die so gesammelten Markierungsinformationen und Ortsinformationen über die Schnittstelle der Anordnung zur Erkennung von zusammengesetzten Objektteilen entweder über ein Netzwerk oder per Funk an ein Datenverarbeitungssystem übertragen werden, wobei das Datenverarbeitungssystem die Informationen auswertet.

11. Verfahren nach dem vorhergehenden Anspruch, **dadurch gekennzeichnet, dass** der Benutzer in Abhängigkeit von objektspezifischen Vorgaben geführt wird.

12. Datenverarbeitungssystem zur Aufarbeitung und Auswertung von Informationen,
- mit einer Schnittstelle, die Informationen von einer Anordnung zur Erkennung von zusammengesetzten Objektteilen entweder über ein Netzwerk oder per Funk austauscht,
- mit einer Anzeigeeinheit, die in einer Dimension die Ortsinformationen abbildet, in einer zweiten Dimension die Objekttypen, wobei die Qualität, mit der die Objektteile zusammengesetzt wurden, mit Hilfe einer Farbe dargestellt wird.
